# EUROPÄISCHE PATENTSCHRIFT

(11) **EP 1 230 715 B1**
(45) Veröffentlichungstag und Bekanntmachung des Hinweises auf die Patenterteilung: **27.02.2008**
(21) Anmeldenummer: 01964913.6
(22) Anmeldetag: 16.08.2001
(51) Int. Cl.: H01R 39/32

(54) **HAKENKOMMUTATOR**
HOOK COMMUTATOR
COLLECTEUR A CROCHETS

(30) Priorität: 30.08.2000 DE 10042512
(43) Veröffentlichungstag der Anmeldung: 14.08.2002
(73) Patentinhaber: ROBERT BOSCH GMBH, 70442 Stuttgart (DE)
(72) Erfinder: LUEDTKE, Ulrich, 76227 Karlsruhe (DE)
(86) Internationale Anmeldenummer: PCT/DE2001/003152
(87) Internationale Veröffentlichungsnummer: WO 2002/019478

(56) Entgegenhaltungen:
- EP-A- 0 379 664
- WO-A-99/18637
- DE-A- 4 026 929
- US-A- 2 782 330

## Beschreibung

### Stand der Technik

Ein Hakenkommutator für ein Elektromotoranker hat Lamellen, auf die der elektrische Strom durch Kohlebürsten übertragen wird. Mit der Lamelle ist ein Wicklungsdraht des drehbar gelagerten Elektromotorankers elektrisch verbunden. Zur Herstellung des Elektromotorankers mit einem Hakenkommutator wird u. a. der Wicklungsdraht um je einen Kommutatorhaken der Lamelle des Hakenkommutators gewickelt. Dabei kommt es bei einem notwendigen Verbindungsprozess von Wicklungsdraht und Kommutatorhaken auf eine gleichbleibend gute mechanische und elektrische Verbindungsqualität von Kommutatorhaken und Wicklungsdraht an. Als einen Verbindungsprozess nutzt man das Hot-staking. Dabei wird der Haken so verformt, dass der Draht eingeklemmt wird. Dann wird eine elektrische Spannung angelegt, damit sich der Kommutatorhaken und der Draht erwärmen, u. a. weil ein Kontaktwiderstand zwischen Draht und Kommutatorhaken vorhanden ist. Dabei löst sich eine Isolationsschicht von dem Draht, und es findet eine Diffusionsschweißung zwischen Draht und Kommutatorhaken statt.

Auf der Lamelle ist oft auch ein Kohlesegment angeordnet, wie es aus der US-PS 5,925,961 bekannt ist.

Das Kohlesegment ist bspw. durch eine Lötung mit der Lamelle verbunden. Bei der Wärmeentwicklung des Verbindungsprozesses zwischen Draht und Kommutatorhaken, insbesondere des Hot-staking, kann sich in unerwünschter Weise diese Lötverbindung zwischen dem Kohlesegment und der Lamelle zumindest teilweise wieder lösen oder das Kohlesegment kann sich verschieben. Dies verringert die elektrischen Eigenschaften, wie z. B. Übergangswiderstand zwischer. Kohle und Lamelle oder die Laufeigenschaften einer Bürste auf einer Kohleoberfläche, oder die Lebensdauer eines Elektromotorankers.

Mit der EP-A-03 79 664 ist ein Kommutator einer elektrischen Maschine bekannt geworden, dessen Lamellen an einem Ende einen Kommutatorhaken aufweisen. Dabei wird der Kommutatorhaken zur Befestigung eines Drahtes derart umgebogen, dass dessen freies Ende an der Lamelle anliegt, wobei der Auflagepunkt aus einem elektrisch isolierenden Material ausgebildet.

### Vorteile der Erfindung

Der erfindungsgemäße Hakenkommutator mit den kennzeichnenden Merkmalen des Anspruchs 1 hat demgegenüber den Vorteil, dass auf einfache Art und Weise die Lötverbindung zwischen Kohlesegment und Lamelle vor zu großer Erwärmung geschützt ist und es zu keiner Beeinträchtigung der Lötverbindung kommt.

Für den Verbindungsprozess zwischen Wicklungsdraht und Kommutatorhaken ist es vorteilhaft, dass ein Abstand zwischen Kommutatorhaken und dem Bereich mit der geringeren Wärmeleitung so groß ist, dass dort eine Elektrode aufgebracht werden kann.

Durch die in den abhängigen Ansprüchen aufgeführten Merkmale sind vorteilhafte Weiterbildungen und Verbesserungen des im Anspruch 1 genannten Hakenkommutators möglich.

Vorteilhaft ist es, wenn eine Querschnittsfläche zwischen dem Kommutatorhaken und dem Kohlesegment reduziert ist, da durch die geringere Querschnittsfläche die Wärmeleitung in diesem Bereich reduziert ist.

Weiterhin ist es vorteilhaft, den Bereich zwischen Kommutatorhaken und dem Kohlesegment so zu verändern, beispielsweise durch die chemische Zusammensetzung oder durch Änderung des Aufbaus der Lamelle, dass die Wärmeleitfähigkeit verringert wird.

### Zeichnung

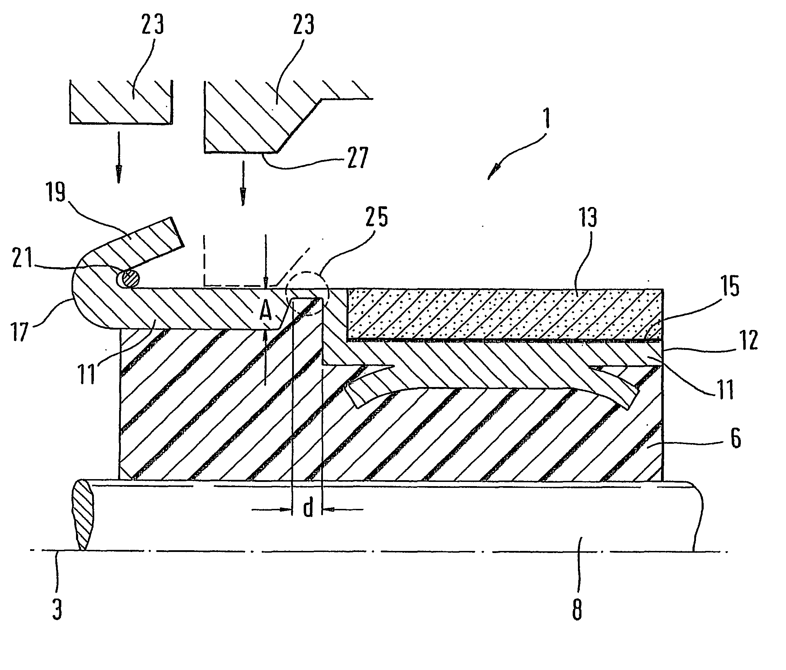

Ein Ausführungsbeispiel der Erfindung ist in der Zeichnung, die einen erfindungsgemäßen Hakenkommutator im axialen Querschnitt zeigt, vereinfacht dargestellt und in der nachfolgenden Beschreibung näher erläutert.

### Beschreibung des Ausführungsbeispiels

Die Zeichnung zeigt einen Hakenkommutator 1 eines ansonsten bekannten Elektromotorankers im axialen Querschnitt, Der Hakenkommutator 1 hat eine Symmetrieachse 3. Auf einer Rotorwelle 8 des Elektromotorankers ist beispielsweise ein Trägerkörper 6 angeordnet. Auf diesen Trägerkörper 6 ist zumindest eine Lamelle 11 aus elektrisch leitendem Material befestigt. Dies geschieht beispielsweise dadurch, dass die Lamelle 11 zumindest teilweise mit Kunststoff umspritzt ist, der beispielsweise das Material für den Trägerkörper 6 bildet. Die Lamelle 11 kann aber auch durch andere Befestigungsmethoden auf dem Trägerkörper 6 befestigt sein.

Die Lamelle 11 trägt auf einem Abschnitt an ihrem einen axialen Ende 12 ein Kohlesegment 13, das durch eine Lötverbindung 15 auf der Lamelle 11 befestigt ist. Die Erfindung beschränkt sich aber nicht auf ein Kohlesegment 13, sondern auch auf alle Segmente, die mit der Lamelle 11 verbunden und wärmeempfindlich sind. An dem anderen axialen Ende 17 der Lamelle 11 ist ein Kommutatorhaken 19 ausgebildet. Durch den Kommutatorhaken 19 wird ein Wicklungsdraht 21 mit der Lamelle 11 elektrisch-verbunden. Das Material der Lamelle 11, beispielsweise Kupfer oder eine Kupferlegierung, hat eine spezifische Wärmeleitfähigkeit □ und senkrecht zur Symmetrieachse 3 zwischen Kommutatorhaken 19 und Kohlesegment 13 eine Querschnittsfläche A.

Beim Verbindungsprozess zur Verbindung von Kommutatorhaken und Draht, beispielsweise dem Hot-staking-Prozess, werden zwei Elektroden 23 auf die Lamelle 11 aufgebracht. Eine Elektrode wird auf den Kommutatorhaken 19 aufgesetzt und die andere Elektrode 23 bspw. zwischen Kommutatorhaken 19 und dem Kohlesegment 13. Bei dem Verbindungsprozess entsteht notwendigerweise Wärme, die die Lötverbindung 15 mit einer Lamelle nach dem Stand der Technik zumindest teilweise zum Auflösen bringen kann.

Um das zu verhindern, ist in zumindest einem Bereich 25 mit der Länge d zwischen Kommutatorhaken 19 und dem Kohlesegment 13 die Wärmeleitung während des Verbindungsprozesses reduziert. Es können ein oder mehrere solcher Bereiche 25 zwischen Kommutatorhaken 19 und dem Kohlesegment 13 vorhanden sein. Bei an die Lamelle 11 angelegten Elektroden 23 liegt der Bereich 25 zwischen dem Kohlesegment 13 und der am nächsten liegenden Elektrode 23.

Bei einer gegebenen Temperaturdifferenz wird die Wärmeleitung durch den Bereich 25 durch den Koeffizienten (□*A/d) bestimmt, d.h. die Wärmeleitfähigkeit in dem Bereich 25 entspricht dem Koeffizienten. Durch eine geeignete Auswahl zumindest einer dieser Parameter kann die Lötverbindung 15 vor erhöhter Erwärmung geschützt werden.

Als erstes kann dies, wie in der Zeichnung gezeigt, dadurch erfolgen, dass eine Querschnittsfläche A in dem Bereich 25 in radialer und/oder senkrecht zu radialen Richtung reduziert ist.

Weiterhin ist es möglich, in dem Bereich 25 die Wärmeleitfähigkeit □ zu verringern. Dies kann beispielsweise durch eine lokale Änderung der chemischen Zusammensetzung erfolgen. Durch eine Beimischung von Partikeln zu dem Material der Lamelle, die eine geringere Wärmeleitfähigkeit haben, wird die Wärmeleitfähigkeit der Lamelle 11 im Bereich 25 verringert.

Aber auch durch einen veränderten Aufbau der Lamelle 11 in dem Bereich 25 kann die Wärmeleitfähigkeit verringert werden, beispielsweise dadurch, dass der Bereich 25 porös ist.

Auch die Länge d des Bereichs 25 kann verlängert werden, um die Wärmeleitung zu verringern.

Auch eine Veränderung von zwei oder drei Parametern des Koeffizienten (□*A/d) ist möglich.

Für den Verbindungsprozess ist es vorteilhaft, dass der Abstand zwischen den Kommutatorhaken 23 und dem Bereich 25 so groß ist, dass eine Elektrode 23 dort vollständig aufgebracht werden kann, ohne den Bereich 25 zu berühren.

Es besteht zwar die Möglichkeit, den Hot-staking-Prozess zuerst auszuführen und dann das Kohlesegment auf die Lamelle 11 mittels einer Lötung aufzubringen. Jedoch bereitet das gegenüber dem Standardverfahren und bei bereits kontaktiertem Wicklungsdraht 21 erhebliche Probleme.

## Patentansprüche

1. Hakenkommutator für einen Elektromotoranker,
der zumindest eine Lamelle (11) hat,
die an einem axialen Ende (17) einen Kommutatorhaken (19) hat, und die an dem anderen axialen Ende (12) zumindest ein Kohlesegment (13) aufweist, das durch eine Lötverbindung (15) auf der Lamelle (11) befestigt ist, wobei die Lamelle (11) in zumindest einem Bereich (25) mit der Länge (d) zwischen dem Kommutatorhaken (19) und dem zumindest einen Kohlesegment (13) senkrecht zur Länge (d) eine Querschnittsfläche (A) aufweist, und die Wärmeleitfähigkeit in diesem Bereich (25) geringer ist als zwischen dem Kommutatorhaken (19) und dem Bereich (25), und ein Abstand zwischen dem Kommutatorhaken (19) und dem Bereich (25) so groß ist, dass eine Elektrode (23) dort vollständig mit ihrer Kontaktfläche (27) aufgebracht werden kann, und die Wärmeleitung im Bereich (25) derart reduziert ist, dass beim Verbindungsprozess zwischen dem Kommutatorhaken und einem Draht die dabei erzeugte Wärme die Lötverbindung (15) nicht auflösen kann.

2. Hakenkommutator nach Anspruch 1,
**dadurch gekennzeichnet, dass**
die Querschnittsfläche (A) in dem Bereich (25) der Lamelle (11) geringer ist als eine Querschnittsfläche zwischen dem Kommutatorhaken (19) und dem Bereich (25).

3. Hakenkommutator nach Anspruch 1 oder 2,
**dadurch gekennzeichnet, dass**
zur Verringerung der Wärmeleitfähigkeit in dem Bereich (25) zwischen dem Kommutatorhaken (19) und dem zumindest einen Kohlesegment (13) die chemischen Zusammensetzung des Materials oder der Aufbau der Lamelle (11) gegenüber dem Lamellenbereich zwischen dem Kommutatorhaken (19) und dem Bereich (25) verändert ist, dass der Koeffizient (□*A/d) verringert ist.

4. Hakenkommutator nach einem oder mehreren der Ansprüche 1 bis 3, **dadurch gekennzeichnet, dass** auf dem Kommutatorhaken (19) eine zweite Elektrode (23) aufsetzbar ist, und der Verbindungsprozess zwischen dem Kommutatorhaken (19) und dem Draht ein Hot-Staking-Prozess ist.

## Claims

1. Hook commutator for an electric motor armature,
which has at least one lamination (11),
which has a commutator hook (19) at one axial end (17), and which has at least one carbon segment (13) at the other axial end (12), the said carbon segment being fixed on the lamination (11) by a solder connection (15), with the lamination (11) having a cross-sectional area (A) in at least one region (25) with the length (d) between the commutator hook (19) and the at least one carbon segment (13) perpendicular to the length (d), and [] the thermal conductivity in this region (25) being lower than between the commutator hook (19) and the region (25), and a distance between the commutator hook (19) and the region (25) being of such a size that an electrode (23) can be applied there with its entire contact area (27), and the thermal conduction in the region (25) being reduced in such a way that, during the connection process between the commutator hook and a wire, the heat generated in the process cannot break the solder connection (15).

2. Hook commutator according to Claim 1,
**characterized in that**
the cross-sectional area (A) in the region (25) of the lamination (11) is smaller than a cross-sectional area between the commutator hook (19) and the region (25).

3. Hook commutator according to Claim 1 or 2,
**characterized in that**,
in order to reduce the thermal conductivity in the region (25) between the commutator hook (19) and the at least one carbon segment (13), the chemical composition of the material or the structure of the lamination (11) is changed compared to the lamination region between the commutator hook (19) and the region (25) such that the coefficient (□*A/d) is reduced.

4. Hook commutator according to one or more of Claims 1 to 3, **characterized in that** a second electrode (23) can be fitted on the commutator hook (19), and the connection process between the commutator hook (19) and the wire is a hot-staking process.

## Revendications

1. Collecteur à crochets d'induit de moteur électrique comportant au moins une lamelle (11) ayant un crochet de collecteur (19) à son extrémité axiale (17) et dont l'autre extrémité axiale (12) comporte au moins un segment de charbon (13) fixé par une liaison soudée (15) à la lamelle (11),
la lamelle (11) ayant une surface de section (A) dans au moins une région (25) de longueur (d) entre le crochet de collecteur (19) et au moins un segment de charbon (13), perpendiculairement à la longueur (d) et
la conductivité thermique dans cette région (25) est inférieure à celle entre le crochet de collecteur (19) et la région (25) et
la distance entre le crochet de collecteur (19) et la région (25) est suffisamment grande pour recevoir une électrode (23), complètement avec sa surface de contact (27) et
la conductivité thermique dans la région (25) est réduite de façon que dans le procédé de liaison, entre le crochet de collecteur et le fil, la chaleur dégagée entre ces éléments ne peut ouvrir la liaison soudée (15).

2. Collecteur à crochet selon la revendication 1,
**caractérisé en ce que**
la surface de section (A) dans la région (25) de la lamelle (11) est inférieure à une surface de section entre le crochet de collecteur (19) et la région (25).

3. Collecteur à crochet selon la revendication 1 ou 2,
**caractérisé en ce que**
pour réduire la conductivité thermique dans la région (25) entre le crochet de collecteur (19) et au moins un segment de charbon (13), la composition chimique de la matière ou la structure de la lamelle par rapport à la région de la lamelle entre le crochet de collecteur (19) et la région (25) est variable et le coefficient (O*A/d) est diminué.

4. Collecteur à crochet selon une ou plusieurs des revendications 1 à 3,
**caractérisé par**
une seconde électrode (23) appliquée sur le crochet de collecteur (19) et le procédé de liaison entre le crochet de collecteur (19) et le fil est un procédé d'accrochage à chaud.
